# EUROPEAN PATENT SPECIFICATION

(11) **EP 0 652 733 B1**
(45) Date of publication and mention of the grant of the patent: **12.11.1997**
(21) Application number: 93918507.0
(22) Date of filing: 29.07.1993
(51) Int. Cl.: A61C 17/34, A61C 17/26

(54) **ELECTRIC TOOTHBRUSH**
ELEKTRISCHE ZAHNBÜRSTE
BROSSE A DENTS ELECTRIQUE

(30) Priority: 01.08.1992 DE 4225548
(43) Date of publication of application: 17.05.1995
(73) Proprietor: CONAIR CORPORATION, Stamford Connecticut 06904 (US)
(72) Inventor: BIGLER, Michael, CH-3063 Ittigen (CH); HOMMANN, Edgar, CH-3257 Grossaffoltern (CH); MYERLY, Scott, Alpharetta, GA 30202 (US)
(74) Representative: Allam, Peter Clerk
(86) International application number: US9307158
(87) International publication number: WO9403125

(56) References cited:
- EP-A- 0 221 460
- EP-A- 0 254 397
- DE-C- 524 651
- FR-A- 706 260

## Description

### BACKGROUND OF THE INVENTION

The invention relates to an electric toothbrush with an electric motor, which generates a motion of rotation and has a motor shaft, a gear that converts the motion of rotation into a reciprocating stroke, and a slip-on brush, which is to be attached to a handle segment so as not to be rotatable in said handle segment and which has a reciprocatable toothed rack in order to drive the rotatable bristle carriers.

Such an electric toothbrush comprising the features of the preamble of claim 1, is the subject matter of the EP-B-O 254 397. In the case of the toothbrush known in this document a contrate gear, which is driven by means of a pinion by the electric motor in the handle segment, is disposed in an eccentric, from which a crank arm leads to a reciprocatable connecting rod that leads out of the handle segment. This connecting rod couples with a toothed rack in the slip-on brush, when said brush is slid on the handle segment. The toothed rack generates in turn an alternating motion of rotation of the individual bristle carriers in the brush head.

If one wants to attain an adequately long stroke of the toothed rack, so that the bristle tufts exert more than one rotation at each stroke, the connecting rod leading out of the handle segment must execute an equally long stroke. That requires an eccentric, which is offset on the contrate gear by half the stroke. The result is automatically a relatively large diameter of the contrate gear, so that the diameter of the handle segment, too, must be correspondingly large, a feature that is often undesired.

The problem on which the invention is based is to design an electric toothbrush of the aforementioned kind in such a manner that its gear can be arranged to convert the motion of rotation of the electric motor into a reciprocating motion even while generating a longer stroke in toothbrushes with a small diameter.

### SUMMARY OF THE INVENTION

This problem is solved by the invention as defined in claim 1.

Such a gear has a small space requirement in the radial direction of the toothbrush, even if a large stroke has to be generated with it, because this stroke is generated by the course of the lifting cam; and the desired stroke can be generated exclusively by extending the lifting cam in the axial direction or by arranging several lifting cams in succession. Despite this advantage, the toothbrush according to the invention is constructed very simply, so that it can be manufactured inexpensively and the risk of malfunctioning is low. The lifting cam can be provided either in the shell of the piston or in kinematic reverse in the inner shell of a borehole bearing the piston.

A different means of converting rotary motion into reciprocating motion of a dental instrument is seen in DE-C-524651 wherein an axially stationary, rotatable gear having threaded grooves is engaged by the bent portion of a tool carrier.

An especially advantageous embodiment of the invention consists of the gear being disposed in the slip-on brush and the piston having a coupling, which, when the slip-on brush is slid on, couples with a drive journal, which leads out of the handle segment and is set into a revolving motion of rotation by the electric motor.

With this design, which is possible, first of all, due to the small size of the gear of the invention in the radial direction, the goal is reached that the gear, which has a tendency to wear, is no longer disposed in the handle segment. Thus, this gear is replaced automatically, when the slip-on brush is replaced. Such a replacement of the slip-on brush takes place in any event from time to time, because the bristles are subject to wear due to the use of the toothbrush. Another advantage of this embodiment lies in the fact that only a rotating journal and not a reciprocating journal has to project from the handle segment. During a longer stroke of a reciprocating journal, there is the risk of injury due to this journal when the slip-on brush is not slipped on.

A very simple design of the gear consists of the piston being axially moveable on the motor shaft and axially moveable in the housing of the handle segment or the slip-on brush; and the lifting cam being designed to generate a reciprocating motion of the piston; and the toothed rack being coupled axially with the piston.

The gear can be further simplified if the lifting cam is a guide groove that extends on the outer shell of the piston and with which engages a guide pin, which is permanently attached to the housing. With too great a lifting cam pitch, the gear could automatically lock. This can be avoided without the need for intersecting lifting cams, if the piston has on its side facing away from the electric motor an extension of the piston with a second lifting cam, on which a toothed rack holder engaging with the second lifting cam can be moved axially and cannot be rotated relative to the housing. With such an embodiment the piston generates by means of its stroke a first part of the stroke of the toothed rack; and the toothed rack holder generates by means of a stroke relative to the piston another part of the stroke of the toothed rack.

Especially with the arrangement of the gear in a slip-on brush it is advantageous if the extension of the piston has a smaller diameter than the piston, because the cross section of the slip-on brush usually decreases towards the front and can, therefore, accommodate the extension of the piston whose diameter is decreased.

The toothbrush hold can be ensured not to rotate in a simple manner in that the outer shell of the toothed rack holder has at least one radial guide pin, which engages with a longitudinal groove of the housing of the toothbrush or the slip-on brush; said groove extending in the direction of the stroke.

An alternative possibility to increase the stroke without a larger lifting cam pitch or crossing of the lifting cam regions consists of the piston exhibiting on the side facing away from the electric motor a coaxial guide bore, into which the toothed rack with the journal projects; this journal exhibiting a second lifting cam, which engages with the guide bore; and the toothed rack exhibiting a locking mechanism.

The toothed rack can be ensured not to rotate in a simple manner in that it is formed by a pin, which penetrates radially through the piston outside the guide bore and whose two ends reach into a longitudinal groove that is attached stationarily to the housing.

Another possibility to generate a longer stroke with a small lifting cam pitch consists of the lifting cam of the piston leading one and one-half times around the piston and then back to its starting part. Such an embodiment leads to an intersecting lifting cam.

The invention permits numerous embodiments. To further illustrate its basic principle, several embodiments are shown as schematic drawings and are described as follows.

### BRIEF DESCRIPTION OF THE DRAWINGS

Figure 1 is a perspective view of an electric toothbrush according to the invention with the slip-on brush not slid on yet.

Figure 2 is a longitudinal view of a first embodiment of a gear of the invention that is disposed in a slip-on brush.

Figure 3 is a longitudinal view of a second embodiment of a gear of the invention that is disposed in a slip-on brush.

Figure 4 is a longitudinal view of a third embodiment of a gear of the invention that is disposed in a slip-on brush.

### DETAILED DESCRIPTION OF THE INVENTION

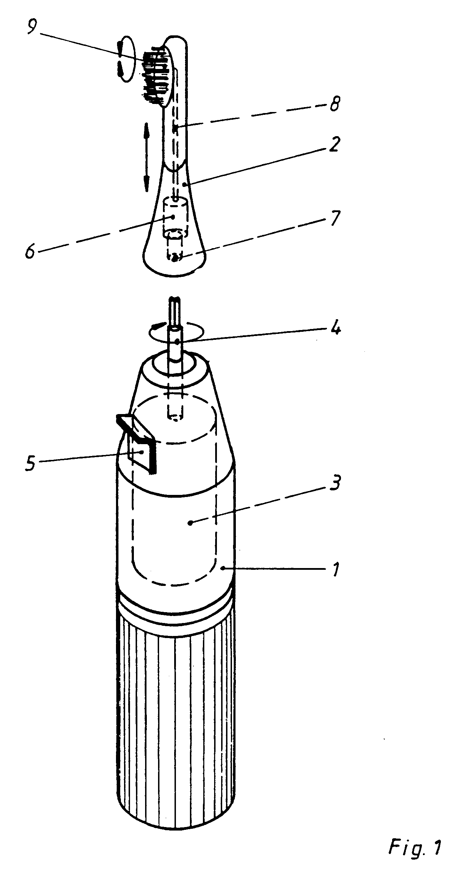

Figure 1 shows an electric toothbrush, which comprises substantially a handle segment 1 and a slip-on brush 2. The handle segment 1 has an electric motor 3, which is shown as a dashed line and which can set a motor shaft 4, protruding from the handle segment 1, into a constant motion of rotation. A switch 5 on the outside of the handle segment 1 serves the purpose of switching the electric motor 3 on and off.

The slip-on brush 2 has a gear 6 that is also shown with a dashed line and that has a coupling 7, which, when slipping the slip-on brush 2 on the handle segment 1, couples with the motor shaft 4. The gear 6 is designed in such a manner that it can generate a reciprocating motion of a toothed rack 8 on the basis of the motion of rotation introduced by the motor shaft 4. This toothed rack can set the bristle carriers (not shown) with bristle tuft 9 rotating so as to alternate from left to right, for example in the exact identical manner as the toothed rack according to the EP-B-O 254 397.

It should be noted that the gear 6 is always arranged in the slip-on brush 2 in Figure 1 and in all subsequent Figures. However, it is also possible to provide this gear 6 in the handle segment 1. Then, instead of a revolving motor shaft 4, a reciprocating ram, which couples with the toothed rack 8 in the handle segment 1, must be led out of the handle segment 1.

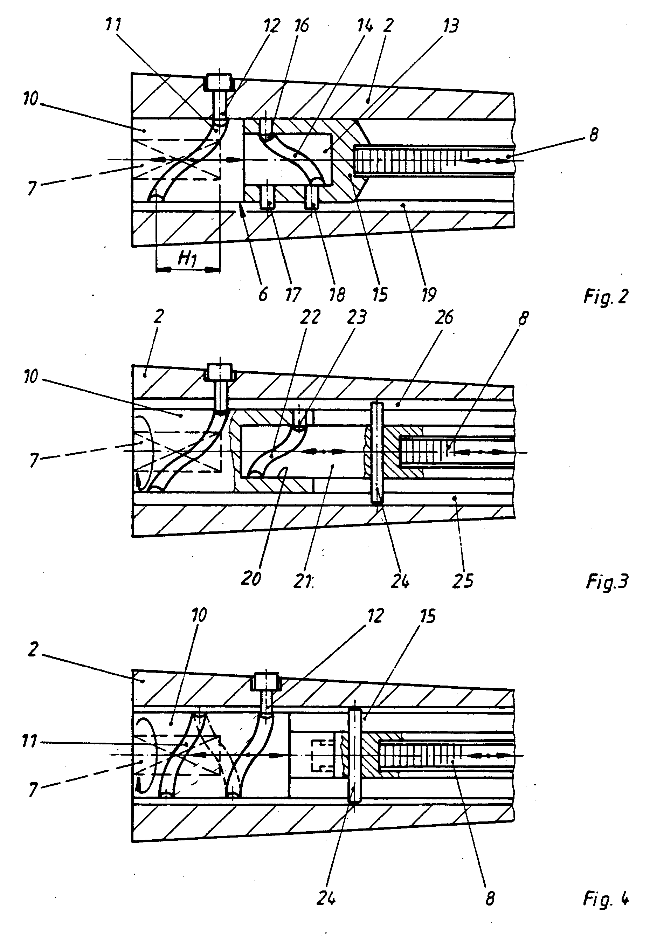

Figure 2 is a longitudinal view of a subregion of the slip-on brush 2 with the gear 6 and the toothed rack 8 on a significantly enlarged scale. This gear 6 has a piston 10, whose outer shell exhibits a lifting cam 11 designed as a peripheral groove. Into this lifting cam 11 projects a guide pin 12, which is guided through the housing of the slip-on brush 2 and is, thus, attached stationarily. If the motor shaft 4, shown in Figure 1, engages with the coupling 7 of the piston 10 and drives it thus so as to rotate, then the piston 10 executes a stroke H1 determined by the pitch of the lifting cam 11. Assumed is that the piston 10 is mounted axially moveably on the motor shaft 4 and in the slip-on brush 2.

The piston 10 has on its side, facing away from the coupling 7 and thus the electric motor 3, a piston extension 13, whose diameter is smaller and whose shell has a second revolving lifting cam 14, that is oriented in the opposing direction. A toothed rack holder 15, which is designed as a cylindrical sleeve and which is connected securely to the toothed rack 8 and engages with this lifting cam 14 by means of a cam 16, is slipped on the piston extension 13.

The outer shell of the toothed rack holder 15 has two guide pins 17, 18, which are directed radially outwardly and which engage with a longitudinal groove 19 of the housing of the slip-on brush 2, said groove extending in the direction of stroke. In this manner the toothed rack holder 15 cannot rotate, but can be moved axially.

When the piston 10 with its piston extension 13 rotates and it effects the already explained stroke H1, then the piston extension 13 also rotates within the toothed rack holder 15. The consequence is that the toothed rack holder 15 moves back and forth on the piston extension 13 relative to the piston 10 and it moves increasing further from the piston 10. This stroke adds to the stroke of the piston 10, so that the toothed rack 8 makes a correspondingly larger stroke than the piston 10.

The embodiment according to Figure 3 represents virtually a kinematic reverse of the embodiment according to Figure 2. In this embodiment, just as in the embodiment according to Figure 2, in the handle segment 1 the piston is provided with the coupling 7. However, it has no piston extension, but rather has on the side facing away from the coupling 7 a coaxial guide bore 20, into which the toothed rack 8 projects with a journal 21. The shell of this journal 21 has a lifting cam 22, with which a radially inwardly directed cam 23 of the piston 10 engages. A pin 24, which is guided radially through the journal 21 outside the guide bore 20 and engages on both sides of the journal 21 with a longitudinal groove 25, 26 of the housing of the slip-on brush 2, serves the purpose of ensuring that piston 10 does not twist.

If in the case of the embodiment according to Figure 3 the piston 10 effects its combined stroke and rotation, then the journal 21 moves due to the second lifting cam 22 and cam 23 of the journal 21 within the guide bore 20, so that the toothed rack 8 effects a stroke that is greater than that of the piston 10.

In the embodiment according to Figure 4 the revolving lifting cam 11 rotates one and one-half times around the piston 10 and correspondingly moves back again to its starting point. The consequence is that due to the revolution of the piston 10 the piston effects a greater stroke than in the case of the two embodiments described above, the lifting cam 11 exhibiting an intersecting point on the side (not evident from Figure 4). In this embodiment the toothed rack 8 is connected in turn by means of the pin 4 to the toothed rack holder 15, which, however, cannot effect a relative motion to the piston 10, so that the toothed rack 8 always effects precisely the same stroke as the piston 10.

## Claims

1. An electric toothbrush having a handle segment (1) and a slip-on brush (2) defining a longitudinal axis therethrough; a motor shaft (4) extending within the handle segment (1) and aligned substantially parallel to the longitudinal axis thereof; an electric motor (3) located within the handle segment (1) for rotating the motor shaft (4) about the longitudinal axis of the motor shaft (4); a reciprocal toothed rack (8) located within the slip-on brush (2) which extends substantially parallel to the longitudinal axis of the electric toothbrush; and a rotatable bristle tuft (9) operatively connected to the reciprocal toothed rack (8); characterized in that the toothbrush comprises:
(a) a gear (6) mounted for rotation with the motor shaft (4) and for sliding movement along the motor shaft (4), the gear (6) being operatively connected to the reciprocal toothed rack (8) so as to convert the rotation of the motor shaft (4) into a reciprocating stroke of the reciprocal toothed rack (8); and
(b) a first lifting cam (11) and a first cam follower (12) interacting with the first lifting cam (11) and associated with the gear (6) such that when the gear (6) is in the revolving motion of rotation, the first lifting cam (11) and first cam follower (12) cause the gear (6) to oscillate back and forth along the motor shaft (4) thereby causing a reciprocating stroke of the reciprocal toothed rack (8) and a corresponding rotational movement of the rotatable bristle tuft (9).

2. The electric toothbrush of Claim 1, and further comprising:
(a) an extension (13) fixed on the gear (6) on the side of the gear (6) facing away from the motor (3); and
(b) a second lifting cam (14) and second cam follower (16) interacting with the second lifting cam (14), the second lifting cam (14) positioned to rotate with the gear (6) and the second cam follower (16) connected to the reciprocal rack (8) such that when the gear (6) is rotating, the extension (13) rotates therewith which acts to increase the distance of the reciprocating stroke of the reciprocal rack (8).

3. The electric toothbrush of Claim 2, and further comprising a rack holder (15) in the shape of a cylindrical sleeve fixed to the reciprocal rack (8) and colinearly extending therefrom in the direction of the gear (6), the second cam follower (16) being fixed in the rack holder (15) and the extension (13) telescoping within the rack holder (15).

4. The electric toothbrush of Claim 1 or Claim 2, wherein the first lifting cam (11) is a guide groove that extends on the outer surface of the gear (6), the guide groove engaging the first cam follower (12) which is fixed to the slip-on brush (2).

5. The electric toothbrush of Claim 2 or Claim 3, wherein the diameter of the extension (13) is smaller than the diameter of the gear (6).

6. The electric toothbrush of Claim 2, wherein the first lifting cam (11) and the second lifting cam (14) are oriented in opposing directions such that as the gear (6) moves axially outward on the motor shaft (4) relative to the motor (3), the reciprocal rack (8) moves axially outward relative to the extension (13).

7. The electric toothbrush of Claim 1, and further comprising a radially extending guide pin (24) associated with the reciprocal rack (8) for movement therewith, and a guide groove (25, 26) extending longitudinally in the slip-on brush (2), the guide pin (24) engaging the guide groove (25, 26) so as to rotationally fix the reciprocal rack (8) in the slip-on brush (2) during a reciprocating movement of the reciprocal rack (8).

8. The electric toothbrush of Claim 1, and further comprising:
(a) a coaxial guide bore (20) on the gear (6) and located on the side of gear (6) facing away from the motor (3); and
(b) a second lifting cam (22) and second cam follower (23), the second cam follower (23) positioned to rotate with the coaxial guide bore (20), and the second lifting cam (22) connected to the reciprocal rack (8), the second lifting cam (22) and second cam follower (23) interacting with each other such that when the gear (6) is rotating, the coaxial guide bore (20) rotates therewith which causes a corresponding reciprocating stroke of the reciprocal rack (8).

9. The electric toothbrush of Claim 8, wherein the second lifting cam (22) is a guide groove formed in the outer surface of a journal (21) which is fixed to and colinearly extends from the reciprocal rack (8), the journal (21) telescoping within the coaxial guide bore (20).

10. The electric toothbrush of Claim 9, wherein the first lifting cam (11) is a guide groove formed in the outer surface of the gear (6) and the first cam follower is fixed to the slip-on brush (2), the first and second lifting cams (11, 22) being oriented in the same direction.

11. The electric toothbrush of Claim 1, wherein the gear (6) is located in the slip-on brush (2).

## Patentansprüche

1. Eine elektrische Zahnbürste mit einem Griffsegment (1) und einer Aufsteckbürste (2), eine Längsachse dadurch hindurch festlegend, eine Motorwelle (4), die sich in das Griffsegment (1) erstreckt und im wesentlichen parallel zur Längsache davon ausgerichtet ist, ein im Griffsegment (1) gelegener Elektromotor (3) zum Drehen der Motorwelle (4) um die Längsachse der Motorwelle (4), eine reziproke, in der Aufsteckbürste (2) gelegene Zahnstange (8), die sich im wesentlichen parallel zur Längsachse der elektrischen Zahnbürste erstreckt, und ein drehbares, funktionsfähig mit der reziproken Zahnstange (8) verbundenes Borstenbüschel (9), dadurch gekennzeichnet, daß die Zahnbürste umfaßt:
(a) ein Getriebe (6), das zwecks Rotation mit der Motorwelle (4) und zwecks Gleitbewegung entlang der Motorwelle (4) montiert ist, wobei das Getriebe (6) funktionsfähig mit der reziproken Zahnstange (8) verbunden ist, um so die Rotation der Motorwelle (4) in einen Umkehrhub der reziproken Zahnstange (8) umzuwandeln, und
(b) einen ersten Hebenocken (11) und einen ersten Nockenstößel (12), der mit dem ersten Hebenocken (11) zusammenwirkt und mit dem Getriebe (6) verknüpft ist, so daß, wenn sich das Getriebe in der Schwenkdrehbewegung befindet, der erste Hebenocken (11) und der erste Nockenstößel (12) das Getriebe veranlassen, entlang der Motorwelle (4) hin- und herzuschwingen, wodurch ein Umkehrhub der reziproken Zahnstange (8) und eine entsprechende Drehbewegung des drehbaren Borstenbüschels (9) hervorgerufen wird.

2. Die elektrische Zahnbürste nach Anspruch 1, die weiterhin umfaßt:
(a) eine auf dem Getriebe (6) an der Getriebeseite (6) befestigte und vom Motor (3) abgewandte Erweiterung (13) und
(b) einen zweiten Hebenocken (14) und einen zweiten, mit dem zweiten Hebenocken (14) zusammenwirkenden Nockenstößel (16), wobei der zweite Hebenocken (14) zum Drehen zusammen mit dem Getriebe (6) positioniert ist und der zweite Nockenstößel (16) mit der reziproken Zahnstange (8) verbunden ist, so daß sich beim Drehen des Getriebes (6) die Erweiterung (13) mit ihm zusammen dreht, was dazu dient, die Distanz des Umkehrhubs der reziproken Zahnstange (8) zu erhöhen.

3. Die elektrische Zahnbürste nach Anspruch 2, die weiterhin einen Zahnstangenhalter (15) in der Form einer zylindrischen Hülse umfaßt, die an der reziproken Zahnstange (8) befestigt ist und sich von dort kollinear in Richtung des Getriebes (6) erstreckt, wobei der zweite Nockenstößel (16) im Zahnstangenhalter (15) befestigt ist und die Erweiterung (13) im Zahnstangenhalter teleskopisch verschiebbar ist.

4. Die elektrische Zahnbürste nach Anspruch 1 oder Anspruch 2, in der der erste Hebenocken (11) eine Führungsnute ist, die sich auf der Außenfläche des Getriebes (6) erstreckt, wobei die Führungsnute den ersten Nockenstößel (12) erfaßt, der an der Aufsteckbürste (2) befestigt ist.

5. Die elektrische Zahnbürste nach Anspruch 2 oder Anspruch 3, in der der Durchmesser der Erweiterung (13) kleiner ist als der Durchmesser des Getriebes (6).

6. Die elektrische Zahnbürste nach Anspruch 2, in der der erste Hebenocken (11) und der zweite Hebenocken (14) in entgegengesetzten Richtungen ausgerichtet sind, so daß, wenn das Getriebe (6) sich axial nach außen auf der Motorwelle (8) bezogen auf den Motor (3) bewegt, sich die reziproke Zahnstange (8) axial nach außen bezogen auf die Erweiterung (13) bewegt.

7. Die elektrische Zahnbürste nach Anspruch 1, die weiterhin einen sich radial erstreckenden Führungsstift (24), der mit der reziproken Zahnstange (8) zwecks Bewegung zusammen mit ihr verknüpft ist, und eine Führungsnute (25, 26), die sich der Länge nach in der Aufsteckbürste (2) erstreckt, wobei der Führungsstift (24) die Führungsnute (25, 26) erfaßt, um so die reziproke Zahnstange (8) in der Aufsteckbürste (2) während einer Umkehrbewegung der reziproken Zahnstange (8) rotierend zu befestigen.

8. Die elektrische Zahnbürste nach Anspruch 1, die weiterhin umfaßt:
(a) eine koaxiale Führungsbohrung (20) am Getriebe (6) und an der Seite des Getriebes (6) gelegen, vom Motor (3) abgewandt, und
(b) einen zweiten Hebenocken (22) und zweiten Nockenstößel (23), wobei der zweite Nockenstößel (23) zum Drehen zusammen mit der koaxialen Führungsbohrung (20) positioniert ist und der zweite Hebenocken (22) mit der reziproken Zahnstange (8) verbunden ist, der zweite Hebenocken (22) und zweite Nockenstößel (23) zusammenwirken, so daß sich beim Drehen des Getriebes (6) die koaxiale Führungsbohrung (20) zusammen mit ihm dreht, was einen entsprechenden Umkehrhub der reziproken Zahnstange (8) hervorruft.

9. Die elektrische Zahnbürste nach Anspruch 8, in der der zweite Hebenocken (22) eine Führungsnute ist, die in der Außenfläche eines Zapfens (21) gebildet ist, der an der reziproken Zahnstange (8) befestigt ist und sich von ihr aus kollinear erstreckt, wobei der Zapfen (21) in der koaxialen Führungsbohrung (20) teleskopisch verschiebbar ist.

10. Die elektrische Zahnbürste nach Anspruch 9, in der der erste Hebenocken (11) eine in der Außenfläche des Getriebes (6) gebildete Führungsnute ist und der erste Nockenstößel an der Aufsteckbürste (2) befestigt ist, wobei die erste und zweite Hebenocken (11, 22) in der gleichen Richtung ausgerichtet sind.

11. Die elektrische Zahnbürste nach Anspruch 1, in der das Getriebe (6) in der Aufsteckbürste (2) liegt.

## Revendications

1. Une brosse à dents électrique comprenant un segment de manche (1) et une brosse coulissante (2) définissant un axe longitudinal à travers; un arbre de moteur (4) qui se prolonge à l'intérieur du segment de manche (1) et aligné de manière substantiellement parallèle à l'axe longitudinal; un moteur électrique (3) situé à l'intérieur du segment de manche (1) pour faire tourner l'arbre du moteur (4) autour de l'axe longitudinal de l'arbre du moteur (4); un support denté reciproque (8) situé dans la brosse coulissante (2) qui se prolonge de manière substantiellement parallèle à l'axe longitudinal de la brosse à dents électrique; et un accessoire brosse rotatif (9) fonctionnellement relié au support denté reciproque (8); caractérisée en ce que la brosse à dents comprend:
(a) un mécanisme de transmission (6) monté de manière à tourner avec l'arbre du moteur (4) et à coulisser le long de l'arbre du moteur (4), le mécanisme de transmission (6) étant fonctionnellement relié au support denté reciproque (8) de manière à convertir la rotation de l'arbre du moteur (4) en un mouvement de va-et-vient du support denté reciproque (8); et
(b) une première came de levage (11) et une première contre-came (12) interagissant avec la première came de levage (11) et associée au mécanisme de transmission (6) de manière à ce que lorsque le mécanisme de transmission (6) est en mouvement de rotation, la première came de levage (11) et la première contre-came (12) amènent le mécanisme de transmission (6) à osciller d'avant en arrière avec l'arbre du moteur (4) provoquant un mouvement de va-et-vient du support denté reciproque (8) et un mouvement rotatif correspondant de l'accesoire brosse rotatif (9).

2. La brosse à dents électrique de la revendication 1 comprenant en outre:
(a) une extension (13) fixée sur le mécanisme de transmission (6) sur le côté de ce mécanisme (6), dans le sens opposé au moteur (3); et
(b) une seconde came de levage (14) et une seconde contre-came (16) interagissant avec la seconde came de levage (14) placée de manière à tourner avec le mécanisme de transmission (6) et la seconde contre-came (16) reliée au support réciproque (8) de manière à ce que lorsque le mécanisme de transmission (6) tourne, l'extension (13) tourne avec pour augmenter la distance du mouvement de va-et-vient du support réciproque (8).

3. La brosse à dents électrique de la revendication 2 comprenant en outre un porte support (15) ayant la forme d'un manchon cylindrique fixé au support réciproque (8) et s'étendant colinéairement dans la direction du mécanisme de transmission (6), la seconde contre-came (16) étant fixée dans le porte support (15) et l'extension (13) s'emboîtant téléscopiquement dans le porte support (15).

4. La brosse à dents électrique de la revendication 1 ou de la revendication 2 dans laquelle la première came de levage (11) est une gorge directrice s'étendant sur la surface extérieure du mécanisme de transmission (6), la gorge directrice s'engageant avec la première contre-came (12) laquelle est fixée sur la brosse coulissante (2).

5. La brosse à dents électrique de la revendication 2 ou de la revendication 3 dans laquelle le diamètre de l'extension (13) est inférieur au diamètre du mécanisme de transmission (6).

6. La brosse à dents électrique de la revendication 2 dans laquelle la première came de levage (11) et la seconde came de levage (14) sont orientées dans des directions opposées de manière à ce que lorsque le mécanisme de transmission (6) se déplace axialement vers l'extérieur sur l'arbre du moteur (4) par rapport au moteur (3), le support réciproque (8) se déplace axialement (8) vers l'extérieur par rapport à l'extension (13).

7. La brosse à dents électrique de la revendication 1 comprenant en outre une goupille à extension radiale (24) associée au support réciproque (8) pour se déplacer avec, et une gorge directrice (25, 26) s'étendant longitudinalement dans la brosse coulissante (2), la goupille (24) s'engageant dans la gorge directrice (25, 26) de manière à fixer rotativement le support réciproque (8) dans la brosse coulissante (2) au cours d'un mouvement de va-et-vient du support réciproque (8).

8. La brosse à dents électrique de la revendication 1 comprenant en outre:
(a) un orifice guide coaxial (20) sur le mécanisme de transmission (6), situé sur le coté du mécanisme de transmission (6), tourné dans le sens opposé au moteur (3); et
(b) une seconde came de levage (22) et contre-came (23), la seconde contre-came (23) étant positionnée de manière à tourner avec le orifice guide coaxial (20) et la seconde came de levage (22) étant connectée au support réciproque (8), la seconde came de levage (22) et la seconde contre-came (23) interagissant l'une avec l'autre de manière à ce que lorsque le mécanisme de transmission (6) tourne, le orifice guide coaxial (20) tourne avec, ce qui provoque un mouvement de va-et-vient correspondant du support réciproque (8).

9. La brosse à dents électrique de la revendication 8 dans laquelle la seconde came de levage (22) est une gorge directrice formée dans la surface extérieure d'un tourillon (21) fixé sur le support réciproque (8) et s'étendant colinéairement, le tourillon (21) s'emboîtant téléscopiquement dans l'orifice guide coaxial (20).

10. La brosse à dents électrique de la revendication 9, dans laquelle la première came de levage (11) est une gorge directrice formée dans la surface extérieure du mécanisme de transmission (6) et la première contre-came est fixée sur la brosse coulissante (2), la première et la seconde cames de levage (11, 22) étant orientées dans la même direction.

11. La brosse à dents électrique de la revendication 1 dans laquelle le mécanisme de transmission (6) est situé sur la brosse coulissante (2).
